# EUROPÄISCHE PATENTSCHRIFT

(11) **EP 1 568 828 B1**
(45) Veröffentlichungstag und Bekanntmachung des Hinweises auf die Patenterteilung: **09.05.2012**
(21) Anmeldenummer: 05002990.9
(22) Anmeldetag: 12.02.2005
(51) Int. Cl.: E04C 2/52, F24D 3/16

(54) **Fertigteil-Baugruppe, insbesondere für Decken, Fussböden und Wände sowie Bauelemente zur Herstellung einer Fertigteil-Baugruppe**
Set of prefabricated elements, especially for ceilings, floors and walls as well as building elements for making a set of prefabricated elements
Série d' éléments de construction préfabriqués, notamment pour plafonds, planchers et murs et éléments de construction pour fabriquer une série d'éléments préfabriqués

(30) Priorität: 24.02.2004 DE 102004009414
(43) Veröffentlichungstag der Anmeldung: 31.08.2005
(73) Patentinhaber: Hertneck, Michael, 70771 Leinfelden-Echterdingen (DE)
(72) Erfinder: Hertneck, Michael, 70771 Leinfelden-Echterdingen (DE)
(74) Vertreter: BRP Renaud & Partner

(56) Entgegenhaltungen:
- EP-A- 0 051 713
- EP-A- 1 382 915
- FR-A- 2 430 569
- US-A- 2 465 348

## Beschreibung

Die Erfindung betrifft eine Fertigteil-Baugruppe, insbesondere für Decken, Fußböden oder Wände, mit mehreren vorgefertigten, miteinander gekuppelten und an stationären Trägem fixierten plattenförmigen Bauelementen, und mit einer in den Bauelementen integrierten, mindestens je einen vorlaufseitigen und einen rücklaufseitigen Anschluss aufweisenden, über einen Vor- und einen Rücklaufverteiler mit Heiz- oder Kühlwasser beaufschlagten Rohranordnung für die Raumklimatisierung.

Fertigteil-Baugruppen mit Betonbauelementen der vorgenannten Art dienen überwiegend zur Herstellung von Flachdecken, Wänden oder Fußböden, die zugleich die Funktion von Flächenheiz- oder Kühlkörpern übernehmen. Bei bekannten Baugruppen (US 2465348) ragen die in den Bauelementen integrierten Rohrleitungen mit ihren Ein- und Ausgangsstutzen aus dem Bauteil heraus. Diese Stutzen müssen durch Anbinden an bauseitige Rohrleitungen mit dem Gesamtsystem verbunden werden. Die Anschlussarbeiten sind dabei wegen der hierfür erforderlichen großen Anzahl an komplizierten Rohrverbindungen sehr aufwendig. Die Fertigteil-Bauelemente sind im Übrigen so dimensioniert, dass sie noch transportabel sind. Ihr Flächenmaß liegt üblicherweise bei ca. 20 bis 30 m².

Aus EP51713 ist ein Wand heizungselement bekannt, wobei mehrere Elemente an einer Wand befestigt und witeinancher Verbunden werden.

Der Erfindung liegt die Aufgabe zugrunde, die bekannten Fertigteil-Baugruppen so zu gestalten, dass der Arbeitsaufwand beim Anschließen der in den Bauelementen befindlichen Rohre und beim anschließenden Einmessen der Anlage signifikant reduziert wird.

Zur Lösung dieser Aufgabe werden die in den Patentansprüchen 1 und 14 angegebenen Merkmalskombinationen vorgeschlagen. Vorteilhafte Ausgestaltungen und Weiterbildungen der Erfindung ergeben sich aus den abhängigen Ansprüchen.

Die Erfindung geht dabei von dem Gedanken aus, dass die Bauelemente der Fertigteil-Baugruppe mit den Rohrleitungen und deren Kupplungsstellen so vorkonfektioniert werden, dass beim Einbau eine direkte Verbindung der einander zugewandten Kupplungsstellen in den nebeneinanderliegenden Bauelementen ohne komplizierte externe Verrohrung möglich ist. Die Vor- und Rücklaufleitungen können bei dieser Art der Verbindung so optimiert werden, dass sie gleich lang sind und dass sie relativ einfach an einen Vor- und Rücklaufverteiler anschließbar sind.

Dies wird gemäß einer ersten Lösungsvariante der Erfindung dadurch reicht, dass jedes plattenförmige Bauelement eine Vorlaufleitung und eine Rücklaufleitung sowie mindestens einen eingangsseitig an die Vorlaufleitung und ausgangsseitig an die Rücklaufleitung angeschlossenen Heiz- und/oder Kühlrohrstrang aufweist, dass die Vorlaufleitungen der einander benachbarten Bauelemente an zugehörigen Kupplungsstellen paarweise miteinander gekuppelt sind und dass auch die Rücklaufleitungen der einander benachbarten Bauelemente an zugehörigen Kupplungsstellen paarweise miteinander gekuppelt sind.

Gemäß einer bevorzugten Ausgestaltung der Erfindung weist die Vorlaufleitung eines speziellen Bauelements der Baugruppe eintrittsseitig einen an den Vorlaufverteiler angeschlossenen Vorlaufstutzen auf. Der Vorlaufstutzen dieses Bauelements bildet dabei zweckmäßig das eintrittsseitige Ende der Vorlaufleitung des in Strömungsrichtung ersten Bauelements der Baugruppe. Weiter ist es von Vorteil, wenn die Rücklaufleitung eines bestimmten Bauelements der Baugruppe einen an den Rücklaufverteiler angeschlossenen Rücklaufstutzen aufweist. Wenn der Vorlaufstutzen und der Rücklaufstutzen in verschiedenen Bauelementen der Baugruppe angeordnet sind, bildet der Rücklaufstutzen zweckmäßig das austrittsseitige Ende der Rücklaufleitung des in Strömungsrichtung letzten Bauelements der Baugruppe.

Eine weitere bevorzugte Ausgestaltung der Erfindung sieht vor, dass die Bauelemente neben der Vorlaufleitung und der Rücklaufleitung eine weitere Durchlaufleitung aufweisen, die einander zugewandten Kupplungsstellen paarweise miteinander gekuppelt sind, wobei die Durchlaufleitung in einem der Bauelemente der Baugruppe intern mit der Rücklaufleitung oder der Vorlaufleitung verbunden ist. Vorteilhafterweise sind die Durchlaufleitung und die Rücklaufleitung intern im letzten Bauelement der Baugruppe hydraulisch miteinander verbunden. In diesem Fall kann der Vorlaufstutzen und der Rücklaufstutzen am gleichen Bauelement angeordnet sein, wobei der Rücklaufstutzen das austrittsseitige Ende der Durchlaufleitung des betreffenden Bauelements bildet. Eine bevorzugte Ausgestaltung der Erfindung sieht vor, dass der Vorlaufstutzen und der Rücklaufstutzen an dem von der Vorlaufseite aus in Strömungsrichtung ersten Bauelement angeordnet sind.

Vorteilhafterweise ist jeder zwischen der Vorlaufleitung und der Rücklaufleitung angeordneten Heiz- und/oder Kühlrohrstrang über die Bauelementfläche oder einen Teil davon spiralig und/oder mäanderförmig verlegt.

Bei der vorstehend beschriebenen Ausführungsvariante der Erfindung liegen die hydraulischen Kupplungsstellen im Bereich zwischen den einander benachbarten Bauelementen. Jede Baugruppe wird über jeweils nur eine Anschlussstelle an den Vor- und Rücklaufverteiler angeschlossen. Je nach Verwendung von zusätzlichen Durchlaufleitungen in den Bauelementen können diese Anschlüsse weit auseinander oder nahe beieinander liegen.

Eine weitere Erfindungsvariante sieht vor, dass jedes Bauelement einen Vor laufstutzen und einen Rücklaufstutzen sowie mindestens einen eingangsseitig mit dem Vorlaufstutzen und ausgangsseitig mit dem Rücklaufstutzen verbundenen Heiz- und/oder Kühlrohrstrang aufweist, und dass der Vorlaufverteiler und der Rücklaufverteiler durch je eine Vorlaufleitung und eine Rücklaufleitung in mindestens einem der Träger gebildet ist, wobei die Vorlaufstutzen an je einer Kupplungsstelle an die Vorlaufleitung und die Rücklaufstutzen an je einer Kupplungsstelle an die Rücklaufleitung angeschlossen sind. In diesem Falle befinden sich zwischen den benachbarten plattenförmigen Bauelementen keine hydraulischen Kupplungsstellen. Die hydraulische Anbindung erfolgt vielmehr an Kupplungsstellen, die zwischen den Bauelementen und den benachbarten Trägern angeordnet sind.

Für beide Ausführungsvarianten gilt, dass zweckmäßig in jedem Heiz- und/oder Kühlrohrstrang ein Regel- oder Steuerventil angeordnet ist, die beispielsweise als Thermostatventile ausgebildet sein können. Um eine unterschiedliche, über die Grenzen der Bauelemente hinweg sich erstreckende Raumaufteilung im fertigen Gebäude vornehmen zu können, ist es von Vorteil, wenn mindestens eine Gruppe von mehreren Regel- oder Steuerventilen beispielsweise nach Maßgabe einer in einem größeren Raum einstellbaren Solltemperatur ansteuerbar ist.

Die vorgefertigten Bauelemente sind vorteilhafterweise als zweischalige Hohlplatten ausgebildet, wobei jeweils die einem zu klimatisierenden Raum zugewandte Schale mit dem mindestens einen Heiz- und/oder Kühlrohrstrang bestückt und vorzugsweise innerhalb des Hohraums gegenüber der anderen Schale durch eine Dämmstoffzwischenschicht isoliert ist. In diesem Fall kann der Hohlraum durch Öffnungen in einer der Schalen hindurch von außen her beispielsweise für Installations-, Wartungs- und Einstellzwecke zugänglich sein.

Die Bauelemente bestehen zweckmäßig überwiegend aus Beton, wobei die Schalen aus Festigkeitsgründen bevorzugt mit einer Stahlbewehrung und/oder einer Faserfüllung versehen sind. Die Heiz- und/oder Kühlrohrstränge sind in den Beton der Bauelemente eingebettet, zweckmäßig eingegossen.

Im Folgenden wird die Erfindung anhand der Zeichnung näher erläutert. Es zeigen
- Fig. 1: ein Schema einer Fertigteil-Baugruppe mit plattenförmigen Bau- elementen, deren Rohranordnungen über interne Vor- und Rück- laufleitungen an räumlich entfernten Stellen an einen Vor- und Rücklaufverteiler anschließbar sind;
- Fig. 2: ein Schema einer Fertigteil-Baugruppe mit Bauelementen, deren Rohranordnungen über interne Vor- und Rücklaufleitungen an räumlich benachbarten Stellen an einen Vor- und Rücklaufvertei- ler anschließbar sind;
- Fig. 3: ein Schema einer Fertigteil-Baugruppe, deren Heiz- und/oder Kühlrohrstränge an externe Vor- und Rücklaufleitungen anschließbar sind.

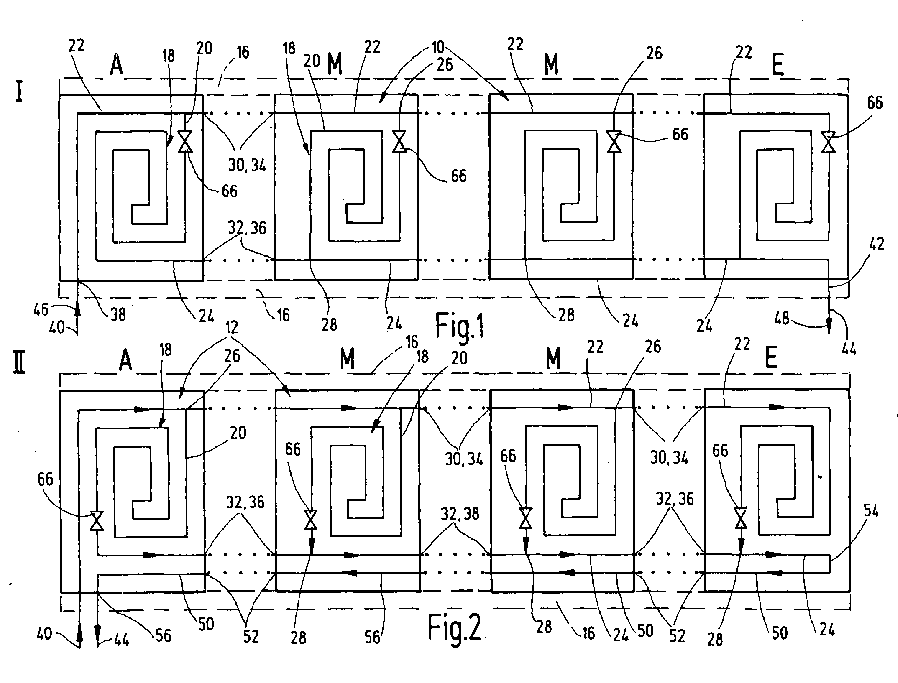

Die in Fig. 1 bis 3 schematisch dargestellten Fertigteil-Baugruppen bilden mit ihren Heiz- und/oder Kühlrohrsträngen eine Flächenheizung oder -kühlung zur Raumklimatisierung. Die plattenförmigen Bauelemente 10,12,14 sind vorzugsweise zweischalige Betonfertigteile mit einer nicht dargestellten Stahlbewehrung, deren Flächenabmessungen ca. 20 bis 30 m² betragen. Die vorgefertigen Bauelemente 10,12,14 werden mit überstehenden Bewehrungseisen in ortsfest betonierten Unterzug-Trägern 16 eingehängt und einbetoniert. In die Bauelemente 10,12,14 ist eine Rohranordnung 18 eingebettet, die jeweils mindestens einen Heiz- und/oder Kühlrohrstrang 20 enthält, der die Bauelementfläche überdeckend spiralig oder mäanderartig verlegt ist.

Bei den Ausführungsbeispielen nach Fig. 1 und 2 enthalten die Bauelemente 10,12 jeweils eine Vorlaufleitung 22 und eine Rücklaufleitung 24, die an den internen Abzweigstellen 26,28 mit den zugehörigen Heiz- und Kühlrohrsträngen 20 kommunizieren. Die einander benachbarten Bauelemente 10A,10M,10E bzw. 12A,12M,12E sind im Bereich ihrer Vorlaufleitungen 22 an Kupplungsstellen 30 und im Bereich ihrer Rücklaufleitungen 24 an Kupplungsstellen 32 paarweise miteinander verbunden. Bei der Herstellung der Bauelemente 10,12 werden im Bereich der Kupplungsstellen 30,32 die Rohrstutzen 34,36 durch eingelegte Schaumstoffstücke freigehalten und beim Kupplungsvorgang paarweise miteinander verpresst.

Bei dem Ausführungsbeispiel nach Fig. 1 enthält das erste Bauelement 10A zusätzlich einen eingangsseitig an der Vorlaufleitung 22 angeordneten Vorlaufstutzen 38, der im Zuge der Montage mit einem bauwerkfest angeordneten Vorlaufverteiler 40 verbunden wird. Weiter enthält das letzte Bauelement 10E gemäß Fig. 1 einen überstehenden Rücklaufstutzen 42, der mit einem bauwerkfesten Rücklaufverteiler 44 verbunden wird. Der Vorlaufverteiler 40 wird im Heizfalle mit einem in einer Heizanlage aufgeheiztem Heizwasser und im Kühlfalle mit Kühlwasser in Richtung des Pfeils 46 beaufschlagt, das nach Durchlaufen der Heiz- und Kühlrohrstränge 20 über den Rücklaufverteiler 44 in Richtung des Pfeils 48 in den Heiz- oder Kühlkreislauf zurückgeführt wird.

Bei dem in Fig. 2 gezeigten Ausführungsbeispiel ist in den Bauelementen 12 zusätzlich jeweils eine Durchlaufleitung 50 vorgesehen, die an Kupplungsstellen 52 zwischen den Bauelementen miteinander verbunden sind. Im Bereich des Bauelements 10,12E sind die Rücklaufleitung 24 und die Durchlaufleitung 50 an der internen Anschlussstelle 54 miteinander verbunden, während im Bauelement 12A die Durchlaufleitung 50 über den Rücklaufstutzen 56 mit dem externen Rücklaufverteiler 44 verbunden ist. Damit ist es möglich, den Vorlaufverteiler und den Rücklaufverteiler ortsnah beieinander anzuordnen.

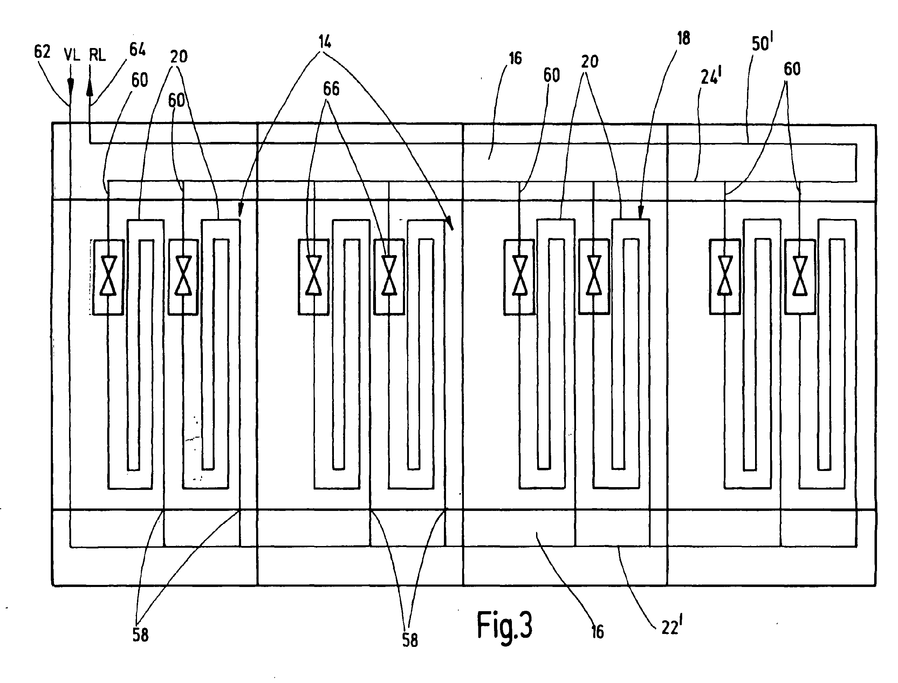

Bei dem Ausführungsbeispiel nach Fig. 3 enthalten die plattenförmigen Bauelemente 14 jeweils zwei Heiz- und/oder Kühlrohrstränge 20, die sich jeweils zwischen einem Vorlaufstutzen 58 und einem Rücklaufstutzen 60 erstrecken. Die Vorlaufstutzen 58 sind mit einer im Unterzug-Träger 16 angeordneten Vorlaufleitung 22' bzw. einer im gegenüberliegenden Unterzug-Träger 16 angeordneten Rücklaufleitung 24' gekuppelt. Die hydraulischen Kupplungen befinden sich hier also zwischen den einzelnen Bauelementen 14 und den benachbarten Trägem 16, während zwischen den Bauelementen 14 keine hydraulischen Kupplungen vorgesehen sind. In einem der Träger 16 neben der Rücklaufleitung 24' zusätzlich eine Durchlaufleitung 50' angeordnet, die an der Anschlussstelle 54' mit der Rücklaufleitung 24' verbunden ist und in der Nähe des Vorlaufanschlusses 62 in einen Rücklaufanschluss 64 mündet. Auf der Rücklaufseite der einzelnen Heiz- und/oder Kühlrohrstränge 20 ist jeweils ein Regelventil 66 angeordnet, das beispielsweise als Thermostatventil ausgebildet sein kann. Grundsätzlich ist es möglich, mehrere Regelventile 66 gruppenweise über einen einzigen Temperaturfühler anzusteuern. Dies ist dann notwendig, wenn die Raumgröße sich über den Bereich mehrerer Heiz- und Kühlrohrstränge 20 erstreckt.

In allen drei Ausführungsbeispielen sind die Heiz- und Kühlrohrstränge 20 parallel durchströmt, wobei die effektive Vorlaufstrecke und die effektive Rücklaufstrecke jeweils etwa gleich lang sind. Dies hat den Vorteil, dass eine hydraulische Einmessung der verschiedenen Heiz- und Kühlrohrstränge 20 entbehrlich ist.

Zusammenfassend ist folgendes festzuhalten: Die Erfindung bezieht sich auf eine Fertigteil-Baugruppe, insbesondere für Decken, Fußböden oder Wände. Die Baugruppe besteht aus mehreren vorgefertigten, mechanisch miteinander gekuppelten und an stationären Trägem 16 fixierten plattenförmigen Bauelementen 10. In den Bauelementen 10 befindet sich eine Rohranordnung 18, die mit Heiz- oder Kühlwasser beaufschlagt ist. Jedes Bauelement 10 weist eine Vorlaufleitung 22 und eine Rücklaufleitung 24 sowie mindestens einen eingangsseitig an die Vorlaufleitung 22 und ausgangsseitig an die Rücklaufleitung 24 angeschlossenen Heiz- und/oder Kühlrohrstrang 20 auf. Die Vorlaufleitungen und die Rückleitungen der einander benachbarten Bauelemente 10 sind an zugehörigen Kupplungsstellen 30,32 paarweise miteinander gekuppelt.

## Patentansprüche

1. Fertigteil-Baugruppe für Decken und Fußböden mit mehreren, vorgefertigten, miteinander gekuppelten und an baustellenfesten Trägem (16) fixierten plattenförmigen Bauelementen (10, 12, 14) mit einer in den Bauelementen integrierten, mindestens je einen vorlaufseitigen und einen rücklaufseitigen Anschluss aufweisenden, über einen Vor- und einen Rücklaufverteiler (40, 44) mit Heiz- oder Kühlwasser beaufschlagten Rohranordnung (18), wobei die Bauelemente (10, 12, 14) überwiegend aus Beton mit einer Stahlbewehrung und/oder Faserfüllung bestehen, wobei jedes Bauelement (10, 12) eine Vorlaufleitung (22) und eine Rücklaufleitung (24) sowie mindestens einen eingangsseitig an die Vorlaufleitung (22) und ausgangsseitig an die Rücklaufleitung (24) angeschlossenen Heiz- und/oder Kühlrohrstrang (20) aufweist, wobei die Heiz- und/oder Kühlrohrstränge (20) in den Beton der Bauelemente eingebettet sind, wobei die Vorlaufleitungen (22) der einander benachbarten Bauelemente (10, 12) an zugehörigen Kupplungsstellen (30) paarweise miteinander gekuppelt sind, wobei die Rücklaufleitungen (24) der einander benachbarten Bauelemente (10, 12) an zugehörigen Kupplungsstellen (32) paarweise miteinander gekuppelt sind.

2. Fertigteil-Baugruppe nach Anspruch 1, **dadurch gekennzeichnet, dass** bei einer ersten Gruppe von Bauelementen (10M, 12M) die Vorlaufleitung (22) und die Rücklaufleitung (24) jeweils einen eingangsseitigen und einen ausgangsseitigen Kupplungsstutzen aufweist.

3. Fertigteil-Baugruppe nach Anspruch 1 oder 2, **dadurch gekennzeichnet, dass** bei einer zweiten Gruppe von Bauelementen (10A,12A) die Vorlaufleitung (22) einen zusätzlichen Kupplungsstutzen (38) für den Anschluss an einen externen Vorlaufverteiler (40) aufweist.

4. Fertigteil-Baugruppe nach den Ansprüchen 1 bis 3, **dadurch gekennzeichnet, dass** bei einer dritten Gruppe von Bauelementen die Rücklaufleitung einen zusätzlichen Kupplungsstutzen (42) für den Anschluss an einen externen Rücklaufverteiler (44) aufweist.

5. Fertigteil-Baugruppe nach Anspruch 3 oder 4, **dadurch gekennzeichnet, dass** die Rücklaufleitung (24) bei der zweiten Bauteilgruppe nur einen Kupplungsstutzen aufweist.

6. Fertigteil-Baugruppe nach Anspruch 4 oder 5, **dadurch gekennzeichnet, dass** die Vorlaufleitung (22) bei der dritten Bauteilgruppe (10E, 12E) nur einen Kupplungsstutzen aufweist.

7. Fertigteil-Baugruppe nach einem der Ansprüche 1 bis 6, **dadurch gekennzeichnet, dass** die Bauelemente (12) eine zusätzliche Durchlauf leitung (50) aufweisen, die an zugehörigen Kupplungsstellen (52) paarweise miteinander gekuppelt sind, wobei die Durchlaufleitung (50) in einem der Bauelemente (12E) intern an einer Anschlussstelle (54) mit der Rücklaufleitung (24) oder der Vorlaufleitung (22) verbunden ist.

8. Fertigteil-Baugruppe nach Anspruch 7, **dadurch gekennzeichnet, dass** die Durchlaufleitung (50) und die Rücklaufleitung (24) der dritten Gruppe von Bauelementen (12E) hydraulisch miteinander verbunden sind.

9. Fertigteil-Baugruppe nach einem der Ansprüche 1 bis 8, **dadurch gekennzeichnet, dass** der an den Vorlaufverteiler (40) angeschlossene Kupplungsstutzen (38) das eintrittsseitige Ende der Vorlaufleitung (22) des in Strömungsrichtung ersten Bauelements (10A, 12A) der Baugruppe bildet.

10. Fertigteil-Baugruppe nach einem der Ansprüche 1 bis 9, **dadurch gekennzeichnet, dass** die an den Vorlaufverteiler und den Rücklaufverteiler angeschlossenen Kupplungsstutzen (28,42) an verschiedenen Bauelementen (10A, 10E) der Baugruppe angeordnet sind.

11. Fertigteil-Baugruppe nach Anspruch 10, **dadurch gekennzeichnet, dass** der an den Rücklaufverteiler angeschlossene Kupplungsstutzen (42) das austrittsseitige Ende der Rücklaufleitung des in Strömungsrichtung letzten Bauelements (10E) der Baugruppe bildet.

12. Fertigteil-Baugruppe nach einem der Ansprüche 7 bis 11, **dadurch gekennzeichnet, dass** die an den Vorlaufverteiler und den Rücklaufverteiler angeschlossenen Kupplungsstutzen (38, 42) am gleichen Bauelement (12A) angeordnet sind, wobei einer der beiden Kupplungsstutzen (38,42) das ein- oder austrittsseitige Ende der Durchlaufleitung (50) des betreffenden Bauelements (12A) bildet.

13. Fertigteil-Baugruppe nach Anspruch 12, **dadurch gekennzeichnet, dass** die an den Vorlaufverteiler und den Rücklaufverteiler angeschlossenen Kupplungsstutzen (38,42) an dem in Strömungsrichtung ersten Bauelement (12A) angeordnet sind.

14. Fertigteil-Baugruppe, insbesondere für Decken, Fußböden oder Wände, mit mehreren vorgefertigten, miteinander gekuppelten und an stationären Trägern (16) fixierten plattenförmigen Bauelementen (10,12,14) mit einer in den Bauelementen integrierten, mindestens je einen vorlaufseitigen und einen rücklaufseitigen Anschluss aufweisenden, über einen Vor- und einen Rücklaufverteiler (40, 44) mit Heiz- oder Kühlwasser beaufschlagten Rohranordnung (18), wobei jedes Bauelement (14) mindestens einen Vorlaufstutzen (58) und mindestens einen Rücklaufstutzen (60) sowie mindestens einen eingangsseitig mit dem Vorlaufstutzen (58) und ausgangsseitig mit dem Rücklaufstutzen (60) verbundenen Heiz- und/oder Kühlrohrstrang (20) aufweist, wobei der Vortaufverteiler und der Rücklaufverteiler durch eine Vorlaufleitung (22') und eine Rücklaufleitung (24') in mindestens einem der Träger (16) gebildet ist, und wobei die Vorlaufstutzen (58) an je einer Kupplungsstelle (68) an die Vorlaufleitung (22') und die Rücklaufstutzen (60) an je einer Kupplungsstelle (70) an die Rücklaufleitung (24') angeschlossen sind.

15. Fertigteil-Baugruppe nach einem der Ansprüche 1 bis 14, **dadurch gekennzeichnet, dass** in jedem Heiz- und/oder Kühlrohrstrang (20) ein Regel- oder Steuerventil (66) angeordnet ist.

16. Fertigteil-Baugruppe nach Anspruch 15, **dadurch gekennzeichnet, dass** die Regelventile (66) als Thermostatventile ausgebildet sind.

17. Fertigteil-Baugruppe nach Anspruch 15 oder 16, **dadurch gekennzeichnet, dass** mindestens eine Gruppe von mehreren Regel- oder Steuerventilen (66) gemeinsam ansteuerbar ist.

18. Fertigteil-Baugruppe nach einem der Ansprüche 1 bis 17, **dadurch gekennzeichnet, dass** die vorgefertigten Bauelemente (10, 12, 14) als zweischalige Hohlplatten ausgebildet sind, wobei jeweils die einem zu klimatisierenden Raum zugewandte Schale mit dem mindestens einen Heiz- und/oder Kühlrohrstrang (20) bestückt und vorzugsweise gegenüber der anderen Schale durch eine Dämmstoffzwischenschicht isoliert ist.

19. Fertigteil-Baugruppe nach Anspruch 18, **dadurch gekennzeichnet, dass** der zwischen den beiden Schalen der Bauelemente gebildete Hohlraum durch Öffnungen in einer der Schalen hindurch von außen her zugänglich ist.

20. Fertigteil-Baugruppe nach einem der Ansprüche 1 bis 19, **dadurch gekennzeichnet, dass** die Bauelemente (10,12,14) überwiegend aus Beton mit einer Stahlbewehrung und/oder Faserfüllung bestehen.

21. Fertigteil-Baugruppe nach Anspruch 20, **dadurch gekennzeichnet, dass** die Heiz- und/oder Kühlrohrstränge (20) in den Beton der Bauelemente eingebettet sind.

22. Fertigteil-Baugruppe nach einem der Ansprüche 1 bis 21, **dadurch gekennzeichnet, dass** jeder zwischen Vorlaufleitung (22) und Rücklaufleitung (24) angeordnete Heiz- und/oder Kühlrohrstrang (20) über die Bauteilfläche spiralig und/oder mäanderförmig verlegt ist.

## Claims

1. A set of prefabricated elements for ceilings and floors with several prefabricated, plate-shaped building elements (10, 12, 14) that are coupled to one another and secured on fixed supports (16) at the construction site, with a pipe arrangement (18) that is integrated into the building elements and respectively features at least one connection on the supply side and one connection on the return side, wherein said pipe arrangement is acted upon with heating or cooling water via a supply and a return distributor (40, 44), wherein the building elements (10, 12, 14) predominantly consist of concrete with a steel reinforcement and/or fiber filling, wherein each building element (10, 12) features a supply line (22) and a return line (24), as well as at least one respective heating and/or cooling pipe conduit (20) connected to the supply line (22) on the inlet side and to the return line (24) on the outlet side, wherein the heating and/or cooling pipe conduits (20) are embedded in the concrete of the building elements, wherein the supply lines (22) of adjacently arranged building elements (10, 12) are coupled to one another in pairs at corresponding coupling points (30), and wherein the return lines (24) of the adjacently arranged building elements (10, 12) are coupled to one another in pairs at corresponding coupling points (32).

2. The set of prefabricated elements according to Claim 1, **characterized in that** the supply line (22) and the return line (24) of a first group of building elements (10M, 12M) respectively feature a coupling piece on the inlet side and a coupling piece on the outlet side.

3. The set of prefabricated elements according to Claim 1 or 2, **characterized in that** the supply line (22) of a second group of building elements (10A, 12A) features an additional coupling piece (38) for the connection to an external supply distributor (40).

4. The set of prefabricated elements according to Claims 1 to 3, **characterized in that** the return line of a third group of building elements features an additional coupling piece (42) for the connection to an external return distributor (44).

5. The set of prefabricated elements according to Claim 3 or 4, **characterized in that** the return line (24) of the second group of building elements only features one coupling piece.

6. The set of prefabricated elements according to Claim 4 or 5, **characterized in that** the supply line (22) of the third group of building elements (10E, 12E) only features one coupling piece.

7. The set of prefabricated elements according to one of Claims 1 to 6, **characterized in that** the building elements (12) feature additional through-conduits (50) that are coupled to one another in pairs at corresponding coupling points (52), wherein the through-conduit (50) in one of the building elements (12E) is integrally connected to the return line (24) or the supply line (22) at a connecting point (54).

8. The set of prefabricated elements according to Claim 7, **characterized in that** the through-conduit (50) and the return line (24) of the third group of building elements (12E) are hydraulically connected to one another.

9. The set of prefabricated elements according to one of Claims 1 to 8, **characterized in that** the coupling piece (38) connected to the supply distributor (40) forms the inlet-side end of the supply line (22) of the first building element (10A, 12A) of the set referred to the flow direction.

10. The set of prefabricated elements according to one of Claims 1 to 9, **characterized in that** the coupling pieces (28, 42) connected to the supply distributor and the return distributor are arranged on different building elements (10A, 10E) of the set.

11. The set of prefabricated elements according to Claim 10, **characterized in that** the coupling piece (42) connected to the return distributor forms the outlet-side end of the return line of the last building element (10E) of the set referred to the flow direction.

12. The set of prefabricated elements according to one of Claims 7 to 11, **characterized in that** the coupling pieces (38, 42) connected to the supply distributor and the return distributor are arranged on the same building element (12A), wherein one of the two coupling pieces (38, 42) forms the inlet-side or outlet-side end of the through-conduit (50) of the respective building element (12A).

13. The set of prefabricated elements according to Claim 12, **characterized in that** the coupling pieces (38, 42) connected to the supply distributor and the return distributor are arranged on the first building element (12A) referred to the flow direction.

14. A set of prefabricated elements, particularly for ceilings, floors or walls, with several prefabricated, plate - shaped building elements (10, 12, 14) that are coupled to one another and secured on stationary supports (16), with a pipe arrangement (18) that is integrated into the building elements and respectively features at least one connection on the supply side and one connection on the return side, wherein said pipe arrangement is acted upon with heating or cooling water via a supply and a return distributor (40, 44), wherein each building element (14) features at least one supply connector (58) and at least one return connector (60), as well as at least one respective heating and/or cooling pipe conduit (20) connected to the supply connector (58) on the inlet side and to the return connector (60) on the outlet side, wherein the supply distributor and the return distributor are formed by a supply line (22') and a return line (24') in at least one of the supports (16), and wherein the supply connector (58) is respectively connected to the supply line (22') at a coupling point (68) and the return connector (60) is respectively connected to the return line (24') at a coupling point (70).

15. The set of prefabricated elements according to one of Claims 1 to 14, **characterized in that** a control or regulating valve (66) is arranged in each heating and/or cooling pipe conduit (20).

16. The set of prefabricated elements according to Claim 15, **characterized in that** the regulating valves (66) are realized in the form of heat valves.

17. The set of prefabricated elements according to Claim 15 or 16, **characterized in that** at least one group of several control or regulating valves (66) can be jointly actuated.

18. The set of prefabricated elements according to one of Claims 1 to 17, **characterized in that** the prefabricated building elements (10, 12, 14) are realized in the form of double-wall hollow plates, wherein the respective wall that faces a room to be air-conditioned is fitted with the at least one heating and/or cooling pipe conduit (20) and preferably insulated relative to the other wall by an intermediate layer of insulating material.

19. The set of prefabricated elements according to Claim 18, **characterized in that** the hollow space formed between the two walls of the building elements is accessible from outside through openings in one of the walls.

20. The set of prefabricated elements according to one of Claims 1 to 19, **characterized in that** the building elements (10, 12, 14) predominantly consist of concrete with a steel reinforcement and/or fiber filling.

21. The set of prefabricated elements according to Claim 20, **characterized in that** the heating and/or cooling pipe conduits (20) are embedded in the concrete of the building elements.

22. The set of prefabricated elements according to one of Claims 1 to 21, **characterized in that** each heating and/or cooling pipe conduit (20) arranged between a supply line (22) and a return line (24) is installed over the surface of the building element in a spiral-shaped and/or meander-shaped fashion.

## Revendications

1. Série d'éléments de construction préfabriqués pour des plafonds et des planchers comprenant plusieurs éléments de construction (10, 12, 14) en forme de plaque, préfabriqués, couplés les uns aux autres et fixés sur des poutres (16) solidaires du chantier, comprenant un agencement de tuyau (18) intégré dans les éléments de construction, présentant chacun au moins un branchement côté avant et un branchement côté arrière, alimenté avec de l'eau de chauffage ou de l'eau de refroidissement par un répartiteur aller et un répartiteur arrière (40, 44), les éléments de construction (10, 12, 14) étant principalement en béton avec une armature d'acier et/ou une charge de fibre, chaque élément de construction (10, 12) présentant une conduite aller (22) et une conduite retour (24) ainsi qu'au moins une branche de tuyau de chauffage et/ou de refroidissement (20) raccordée côté entrée à la conduite aller (22) et côté sortie à la conduite retour (24), les branches de tuyau de chauffage et/ou de refroidissement (20) étant insérées dans le béton des éléments de construction, les conduites aller (22) des éléments de construction (10, 12) voisins les uns des autres étant couplées par paires les unes aux autres en des emplacements d'accouplement (30) spécifiques, les conduites retour (24) des éléments de construction (10, 12) voisins les uns des autres étant couplées les unes aux autres par paires en des points d'accouplement (32) spécifiques.

2. Série d'éléments de construction préfabriqués selon la revendication 1, **caractérisée en ce que**, sur un premier ensemble d'éléments de construction (10M, 12M), la conduite aller (22) et la conduite retour (24) présentent chacune une tubulure d'accouplement côté entrée et une tubulure d'accouplement côté sortie.

3. Série d'éléments de construction préfabriqués selon la revendication 1 ou 2, **caractérisée en ce que**, sur un second groupe d'éléments de construction (10A, 12A), la conduite aller (22) présente une tubulure d'accouplement (38) supplémentaire pour le raccordement à un répartiteur aller (40) externe.

4. Série d'éléments de construction préfabriqués selon les revendications 1 à 3, **caractérisée en ce que**, sur un troisième groupe d'éléments de construction, la conduite retour présente une tubulure d'accouplement (42) supplémentaire pour le raccordement à un répartiteur retour (44) externe.

5. Série d'éléments de construction préfabriqués selon la revendication 3 ou 4, **caractérisée en ce que** la conduite retour (24) présente uniquement une tubulure d'accouplement sur le second ensemble.

6. Série d'éléments de construction préfabriqués selon la revendication 4 ou 5, **caractérisée en ce que** la conduite aller (22) présente sur le troisième ensemble (10E, 12E) uniquement une tubulure d'accouplement.

7. Série d'éléments de construction préfabriqués selon l'une des revendications 1 à 6, **caractérisée en ce que** les éléments de construction (12) présentent une conduite continue (50) supplémentaire, lesquels sont couplés les uns aux autres par paires en des points d'accouplement (52) spécifiques, la conduite continue (50) étant reliée dans l'un des éléments de construction (12E) de façon interne en un point de raccordement (54) à la conduite retour (24) ou la conduite aller (22).

8. Série d'éléments de construction préfabriqués selon la revendication 7, **caractérisée en ce que** la conduite continue (50) et la conduite retour (24) du troisième groupe d'éléments de construction (12E) sont reliées de façon hydraulique les unes aux autres.

9. Série d'éléments de construction préfabriqués selon l'une des revendications 1 à 8, **caractérisée en ce que** la tubulure d'accouplement (38) raccordée au répartiteur aller (40) forme l'extrémité côté entrée de la conduite aller (22) du premier élément de construction (10A, 12A), vu dans le sens d'écoulement, de l'ensemble.

10. Série d'éléments de construction préfabriqués selon l'une des revendications 1 à 9, **caractérisée en ce que** les tubulures d'accouplement (28, 42), raccordées au répartiteur aller et au répartiteur retour, sont disposées sur différents éléments de construction (10A, 10E) de l'ensemble.

11. Série d'éléments de construction préfabriqués selon la revendication 10, **caractérisée en ce que** la tubulure d'accouplement (42), raccordée au répartiteur retour, forme l'extrémité côté sortie de la conduite retour du dernier élément de construction (10E), vu dans le sens d'écoulement, de l'ensemble.

12. Série d'éléments de construction préfabriqués selon l'une des revendications 7 à 11, **caractérisée en ce que** les tubulures d'accouplement (38, 42), raccordées au répartiteur aller et au répartiteur retour, sont disposées sur le même élément de construction (12A), l'une des deux tubulures d'accouplement (38, 42) formant l'extrémité côté entrée ou côté sortie de la conduite continue (50) de l'élément de construction (12A) concerné.

13. Série d'éléments de construction préfabriqués selon la revendication 12, **caractérisée en ce que** les tubulures d'accouplement (38, 42), raccordées au répartiteur aller et au répartiteur retour, sont disposées sur le premier élément de construction (12A), vu dans le sens d'écoulement.

14. Série d'éléments de construction préfabriqués, en particulier pour des plafonds, des planchers ou des parois, comprenant plusieurs éléments de construction (10, 12, 14) préfabriqués, couplés les uns aux autres et fixés sur des poutres (16) fixes avec un agencement de tuyau (18) intégré dans les éléments de construction, présentant à chaque fois un branchement côté aller et un branchement côté retour, alimenté par un répartiteur aller et un répartiteur retour (40, 44) avec de l'eau de chauffage ou de l'eau de refroidissement, chaque élément de construction (14) présentant au moins une tubulure aller (58) et au moins une tubulure retour (60) ainsi qu'au moins une branche de tuyau de chauffage et/ou de refroidissement (20) reliée côté entrée à la tubulure aller (58) et côté sortie à la tubulure retour (60), le répartiteur aller et le répartiteur retour étant formés par une conduite aller (22') et une conduite retour (24') dans au moins l'une des poutres (16), et les tubulures aller (58) étant raccordées chacune à chaque fois en un point d'accouplement (68) à la conduite aller (22') et les tubulures retour (60) à chaque fois en un point d'accouplement (70) à la conduite retour (24').

15. Série d'éléments de construction préfabriqués selon l'une des revendications 1 à 14, **caractérisée en ce qu'**une vanne de réglage ou de commande (66) est disposée dans chaque branche de tuyau de chauffage et/ou de refroidissement (20).

16. Série d'éléments de construction préfabriqués selon la revendication 15, **caractérisée en ce que** les vannes de réglage (66) sont conçues comme des vannes thermostatiques.

17. Série d'éléments de construction préfabriqués selon la revendication 15 ou 16, **caractérisée en ce qu'**au moins un ensemble de plusieurs vannes de réglage ou de commande (66) peut être actionné conjointement.

18. Série d'éléments de construction préfabriqués selon l'une des revendications 1 à 17, **caractérisée en ce que** les éléments de construction (10, 12, 14) préfabriqués sont conçus sous forme de plaques creuses à deux coques, la coque, associée à un espace à climatiser, étant équipée à chaque fois avec la au moins une branche de tuyau de chauffage et/ou de refroidissement (20) et étant isolée de préférence par rapport à l'autre coque par une couche intermédiaire en matériau isolant.

19. Série d'éléments de construction préfabriqués selon la revendication 18, **caractérisée en ce que** la cavité formée entre les deux coques des éléments de construction est accessible par l'extérieur à travers des ouvertures pratiquées dans l'une des coques.

20. Série d'éléments de construction préfabriqués selon l'une des revendications 1 à 19, **caractérisée en ce que** les éléments de construction (10, 12, 14) sont principalement en béton avec une armature en acier et/ou un remplissage de fibre.

21. Série d'éléments de construction préfabriqués selon la revendication 20, **caractérisée en ce que** les branches de tuyau de chauffage et/ou de refroidissement (20) sont insérées dans le béton des éléments de construction.

22. Série d'éléments de construction préfabriqués selon l'une des revendications 1 à 21, **caractérisée en ce que** chaque branche de tuyau de chauffage et/ou de refroidissement (20), disposée entre la conduite aller (22) et la conduite retour (24), est posée en forme de spirale et/ou de méandre sur la surface d'élément de construction.
